# EUROPEAN PATENT APPLICATION

(11) **EP 2 876 541 A1**
(43) Date of publication of application: **27.05.2015**
(21) Application number: 14190998.6
(22) Date of filing: 30.10.2014
(51) Int. Cl.: G06F 3/06

(54) **Method and apparatus to reclaim free space**

(30) Priority: 26.11.2013 TW 102143051
(71) Applicant: Synology Incorporated, Taipei 103 (TW)
(72) Inventor: Zhuo, Yi-Lin, 231 New Taipei City (TW); Chang, Cheng-Yu, 220 New Taipei City (TW); Wei, Jie-Wen, 334 Taoyuan County (TW); Cheng, Chung-Chiang, 406 Taichung City (TW)
(74) Representative: Straus, Alexander

(57) **Abstract**

A storage system (200) has a plurality of physical blocks (222_1-222_M), a buffer (230) and a controller (210). In response to an unmap command (S410, S510) received from an operating machine (240), the controller (210) moves a mapping (232_1-232_N) between a physical block (222_1-222_M) and a logical block of the storage system (200) to a buffer (230) to prepare a deallocation procedure. Then, the controller (210) transmits a completion response to the operating machine (240). The unmap command (S410, S510) is used to cancel the mapping (232_1-232_N), the completion response is used to notify the operating machine (240) that execution of the unmap command (S410, S510) has been finished, and the deallocation procedure is used to deallocate the physical block (222_1-222_M) according to the mapping (232_1-232_N) in the buffer (230). After the completion response has been transmitted to the operating machine (240), the controller (210) deallocates the physical block (222_1-222_M) according to workload of the storage system (200).

## Description

### Field of the Invention

The present invention relates to a storage system and a method for controlling operations of the storage system, and more specifically to a storage system and a control method thereof for speedy execution of unmap commands.

### Background of the Invention

For conventional storage system, there are mappings between logical blocks and physical blocks. When there is a request for disk space (e.g. generating a file) or returning of disk space (e.g. deleting a file), the mappings are required to operate the physical blocks. Furthermore, when space of the physical blocks is released, an unmap command is transmitted to the storage system. Mappings between the logical blocks and the physical blocks are canceled and deallocation is performed on the physical blocks to release the space of the physical blocks. For example, when the storage system is conducting a delete file operation, a mechanism to send the unmap command is triggered. After the storage system has received the unmap command, the mappings needing to be canceled are determined according to the unmap command and deallocation performed to corresponding physical blocks to release the space. When the deallocation of the physical blocks of the storage system has finished, a response stating that the unmap operation has finished is generated.

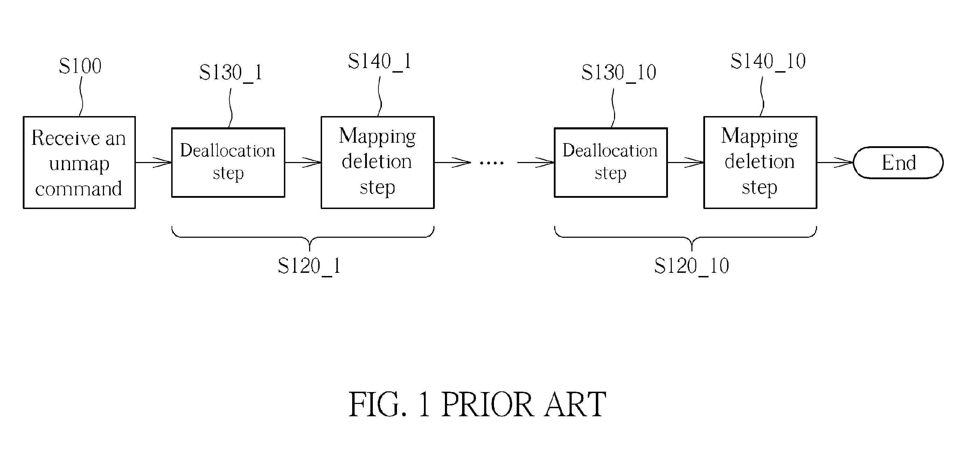

FIG. 1 illustrates a flowchart of an unmap operation according to prior art. After receiving an unmap command (Step S100), a plurality of deallocation procedures S120_1 to S120_10 are performed according to the received unmap command on corresponding physical blocks. For example one has ten physical blocks corresponding to the unmap command, the storage system performs each of the deallocation procedures S120_1 to S120_10 (for a total of 10 procedures), performs deallocation on each of the ten physical blocks and delete corresponding mappings. Each of the deallocation procedures S120_1 to S120_10 comprises a deallocation step (Step S130_1) and a mapping deletion step (Step S140_1). Each of the deallocation steps S130_1 to S130_10 is used to perform deallocation to a corresponding physical block and each of the mapping deletion steps S140_1 to S140_10 is used to delete the mapping on the corresponding physical block. However, performing the deallocation steps S130_1 to S130_10 is very time consuming. And the deallocation procedures S120_1 to S120_10 must be finished before the storage system sends a response stating that the unmap operation has finished and executes subsequent commands. Therefore, the subsequent commands of the storage system are affected and experience delay in execution causing the storage device to have poor performance.

### Summary of the Invention

An embodiment of the present invention presents a method of controlling a storage system. The method comprises receiving an unmap command from an operating machine, moving a mapping between at least one physical block and at least one logic block of a storage module of the storage system to a buffer of the storage system to prepare at least one deallocation procedure in response to the unmap command, sending a completion response to the operating machine, and executing the at least one deallocation procedure according to workload of the storage system after sending the completion response to the operating machine. The unmap command is used to cancel the mapping. The deallocation procedure is used to deallocate the at least one physical block according to the mapping stored in the buffer. The completion response is used to inform the operating machine of completion of the unmap command execution.

An embodiment of the present invention presents a storage system. The storage system comprises a plurality of physical blocks, a buffer and a controller. The plurality of physical blocks is used to store data. The buffer is used to temporarily store data. The controller is coupled to the plurality of physical blocks, and the buffer and is used by the operating machine to receive an unmap command. The unmap command is configured to cancel a mapping of at least one physical block to at least one logical block. In response to the unmap command, the mapping is moved to a buffer of the storage system by the controller to prepare at least one deallocation procedure. A completion response is sent to the operating machine by the controller. After sending the completion response to the operating machine, the at least one deallocation procedure is executed by the controller according to workload of the storage system. The completion response is sent to the operating machine to inform the operating machine of completion of the unmap command execution, and the deallocation procedure will deallocate the at least one physical block according to the mapping stored in the buffer.

When an unmap command is executed by the storage system according to the method of controlling the storage system, the mapping may be transferred to the buffer to prepare at least one deallocation procedure. Afterwards, a completion response is sent to the operating machine. After sending the completion response, the storage system may continue to execute subsequent commands, thereby, reducing the response time of storage system to the unmap command. Furthermore, the storage system may be determined to be busy or in idle state according to the workload of the storage system. When the storage system is determined to be in an idle state, the controller may execute deallocation procedure to perform deallocation of physical blocks and release the space of the physical blocks so that the storage system may have better performance.

### Brief Description of the Drawings

The invention is further illustrated by way of example, taking reference to the accompanying drawings. Thereof:
FIG. 1 is a flowchart of an unmap operation according to prior art,
FIG. 2 is a function block diagram of a storage system connecting to an operating machine according to an embodiment of the present invention,
FIG. 3 illustrates the mappings of a plurality of logical blocks and a plurality of physical blocks of the storage system in FIG. 2,
FIG. 4 is a flowchart of performing an unmap command by the controller in FIG. 2,
FIG. 5 is a flowchart of a method of controlling the storage system in FIG. 2,
FIG. 6 is a flowchart of the controller in FIG. 2 executing a write command according to an embodiment of the present invention, and
FIG. 7 is a flowchart of the controller in FIG. 2 executing a write command according to another embodiment of the present invention.

### Detailed Description

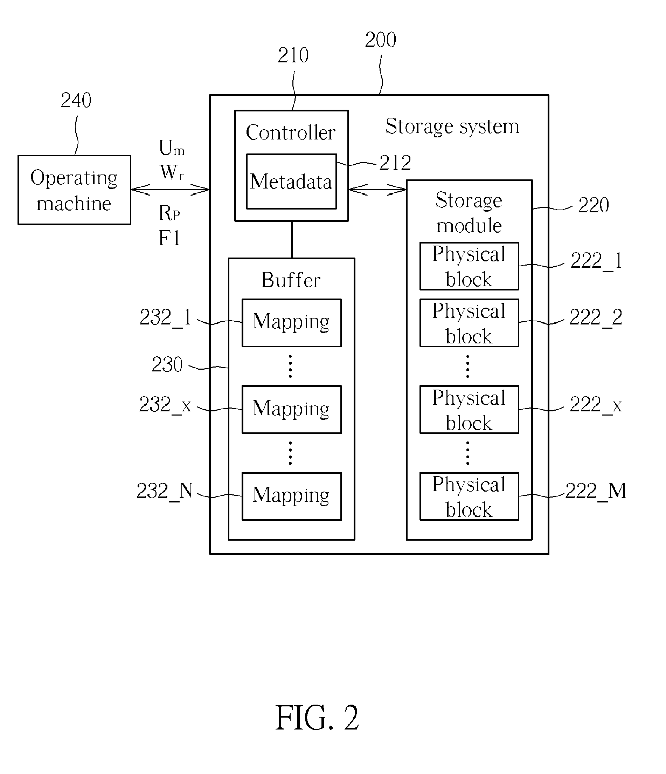

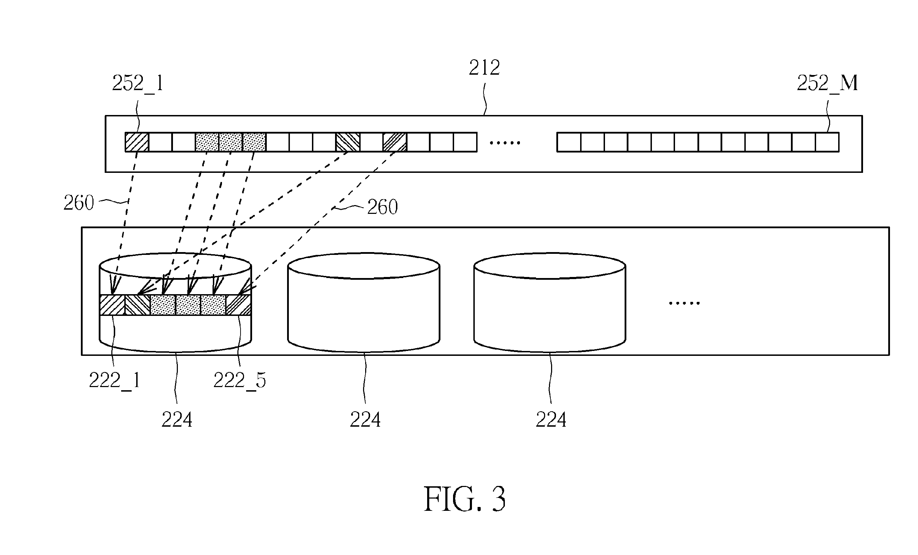

FIG. 2 is a function block diagram of a storage system 200 connecting to an operating machine 240 according to an embodiment of the present invention. FIG. 3 is used to illustrate the mappings of a plurality of logical blocks 252_1 to 252 _M and a plurality of physical blocks 222_1 to 222_M of the storage system 200 in FIG. 2. The operating machine 240 may be an electronic device able to send access command to the storage system 200, i.e. a personal computer, a server, a mobile phone, etc. The operating machine 240 may link to the storage system 200 using wired or wireless methods. Furthermore, in the embodiment of the present invention, the storage system 200 may be, but is not limited to, a Redundant Array of Independent Disks (RAID) having a plurality of storage drives 224. For example, the storage system 200 may be a solid state driver, a hard disk, a flash memory or any storage device that may be used to store data and file. Furthermore, the storage system 200 may be an electronic apparatus having a storage device, e.g. a personal computer, a server, a mobile phone, etc. In addition, the storage drives 224 of the embodiment may be a hard drive or a solid state drive grouped to form the Redundant Array of Independent Disks (RAID). The storage system 200 comprises a controller 210, a storage module 220, and a buffer 230. The controller 210 is coupled to the storage module 220 and the buffer 230 and is used to control the operations of the storage system 200. The storage module 220 comprises the plurality of physical blocks 222_1 to 222_M and may be used to record data. The buffer 230 may also be used to temporarily store data needed by the controller 210. In an embodiment of the present invention, the storage module 220 and the buffer 230 may be formed using any non-volatile memory (i.e. Flash memory, magnetic memory card, etc.). The non-volatile memory used to form the storage module 220 and the non-volatile memory used to form the buffer 230 may be the same or different.

The controller 210 may control the operations of the storage system 200 according to a metadata 212. In an embodiment of the present invention, the metadata 212 may be stored in a non-volatile memory such as a solid state drive, a flash memory etc. When the storage system 200 is turned on, the storage system 200 is read by the controller 210. The solid state drive and the flash memory do not need to be mechanically rotated to work, unlike hard disks. Therefore, if the metadata 212 is stored in the solid state drive or the flash memory, the data processing speed of the storage system 200 may be faster as compared to the data processing speed when the metadata 212 stored in a conventional hard disk. Furthermore, the metadata 212 may record the mappings 260 between the plurality of logical blocks 252_1 to 252_M and the plurality of physical blocks 222_1 to 222_M and the corresponding addresses of the physical block and the logical block recorded in each mapping 260. When the operating machine 240 needs to access the storage system 200, the controller 210 may convert the addresses of the logical blocks corresponding to the access command to the addresses of physical blocks corresponding to the access command according to the mappings 260 provided by the metadata 212 to control the corresponding physical blocks to perform corresponding actions. For example, when a storage drive 224 of the storage system 200 is performing an operation of deleting a file, the operating machine 240 may be triggered to send an unmap command Um. After the controller 210 receives the unmap command Um, the mappings 260 that need to be canceled are determined according to the unmap range. However, unlike the prior art that needs to complete the deallocations of the physical blocks before performing subsequent commands, the controller 210 moves the mappings 260 of the physical blocks that would be deallocated from the metadata 212 to the buffer 230 after receiving the unmap command Um. Afterwards, a completion response Rp is sent to the operating machine 240 to inform the operating machine 240 of completion of the unmap command execution, Um. After the completion response Rp is sent, subsequent commands of the operating machine 240 may be executed immediately. Therefore, the response time of the controller 210 to the unmap command Um may be relatively shortened.

Taking deallocation of the physical block 222_x as an example, the controller 210 may move the mapping 260 of the physical block 222_x from the metadata 212 to the buffer 230 to be stored as a mapping 232_x in the buffer 230. The mapping 232_x has recorded the address of the physical block 222_x and may allow the controller 210 to perform deallocation of the physical block 222_x in the background. In other words, after the controller 210 receives the unmap command Um; deallocation on the physical block 222_x need not be performed immediately. The mapping 232_x may be stored first in the buffer 230. Wait for the storage system 200 to be in idle state and then the controller 210 may perform deallocation on the physical block 222_x according to the mapping 232_x stored in the buffer 230. The controller 210 may not be delayed in executing subsequent commands due to the unmap command Um. Therefore, as compared to prior art, the storage system 200 may have a better access performance.

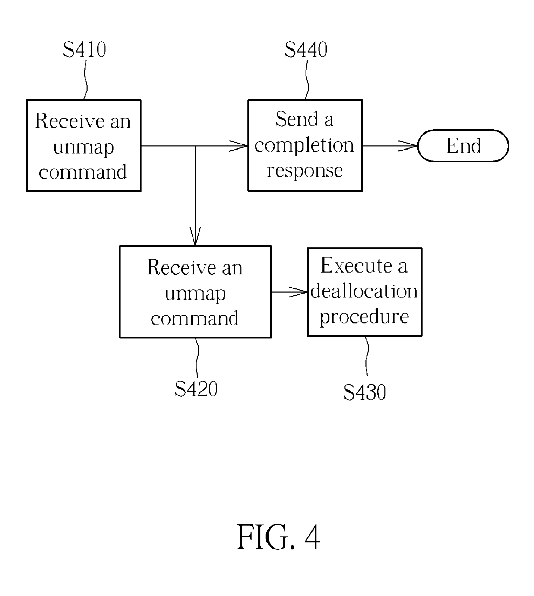

FIG. 4 is a flowchart of performing an unmap command Um by the controller 210 in FIG. 2. If an unmap command Um is configured to command the controller 210 to cancel the mapping 260 of physical block 222_x, after the controller 210 receives an unmap command Um (Step S410) from the operating machine 240, the controller 210 may move the mapping 260 of the physical block 222_x from the metadata 212 to be stored as the mapping 232_x in the buffer 230 (Step S420) to prepare for execution of deallocation procedure (Step S430). After the controller 210 moves the mapping 260 of the physical block 222_x from the metadata 212 to the buffer 230 (Step S420), the completion response Rp may be sent to the operating machine 240 (Step S440) to notify the operating machine 240 that the unmap command Um has been executed by the controller 210. In this embodiment, the deallocation procedure performed in step S430 is configured to deallocate the physical block 222_x and allow the controller 210 to determine if the deallocation procedure should be performed according to the workload of the storage system 200 after the controller 210 completed Step S420. When the storage system 200 is in an idle state or when an amount of data to be processed by the controller 210 is less than a predetermined value, the controller 210 may execute a deallocation procedure and perform deallocation on the physical block 222_x (Step S430) according to the mapping 232_x stored in the buffer 230. After the deallocation of the physical block 222_x has finished, the controller 210 may delete the mapping 232_x from the buffer 230. Furthermore, as shown in FIG. 4 Steps S430 and S440 may be performed simultaneously by the controller 210.

Note that the present invention is not limited to cancel the mapping 260 of only one physical block 222_x. In other words, the present invention may use the unmap command Um to cancel the mappings 260 of a plurality of physical blocks. For example, if the unmap command Um is configured to command the controller 210 to cancel the mappings 260 of the plurality of physical blocks 222_1 to 222_x, then the controller 210 in step S420 may move the mappings 260 of the plurality of physical blocks 222_1 to 222_x to be stored as the mappings 232_1 to 232_x in the buffer 230. Each of the mappings 232_1 to 232_x may correspond to a deallocation procedure to be performed by the controller 210. Afterwards, when the storage system 200 is in idle state or when an amount of data to be processed by the controller 210 is less than a predetermined value, the controller 210 may sequentially execute multiple deallocation procedures and perform deallocation on the physical blocks 222_1 to 222_x according to the mappings 232_1 to 232_x. After the deallocation of the plurality of physical blocks 222_1 to 222_x has finished, the controller 210 may erase the mappings 232_1 to 232_x from the buffer 230. Furthermore, during the deallocation of the plurality of physical blocks 222_1 to 222_x, when the deallocation of one physical block has finished, the corresponding mapping of the physical block may be deleted from the buffer 230 and need not wait to finish deallocation of all the physical blocks to be deallocated.

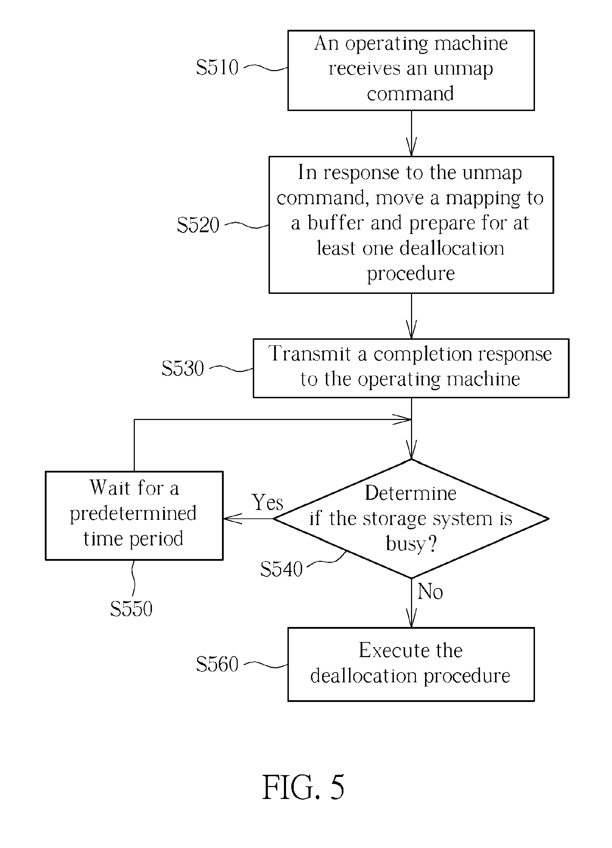

FIG. 5 is a flowchart of a method of controlling the storage system 200 in FIG. 2. The method may include but is not limited to the following steps:
Step S510: An operating machine receives an unmap command;
Step S520: In response to the unmap command, move a corresponding mapping to a buffer and prepare for at least one deallocation procedure;
Step S530: Transmit a completion response to the operating machine;
Step S540: Determine if the storage system 200 is busy. For example, determine if the workload of the store system 200 is zero and the store system 200 is in an idle state, or determine if an amount of data to be processed by the controller 210 is less than a predetermined value. If the result is positive, go to step S550; else, go to step S560;
Step S550: Wait for a predetermine time period (e.g. 30 seconds, 1 minute, etc.); and
Step S560: Execute the deallocation procedure.

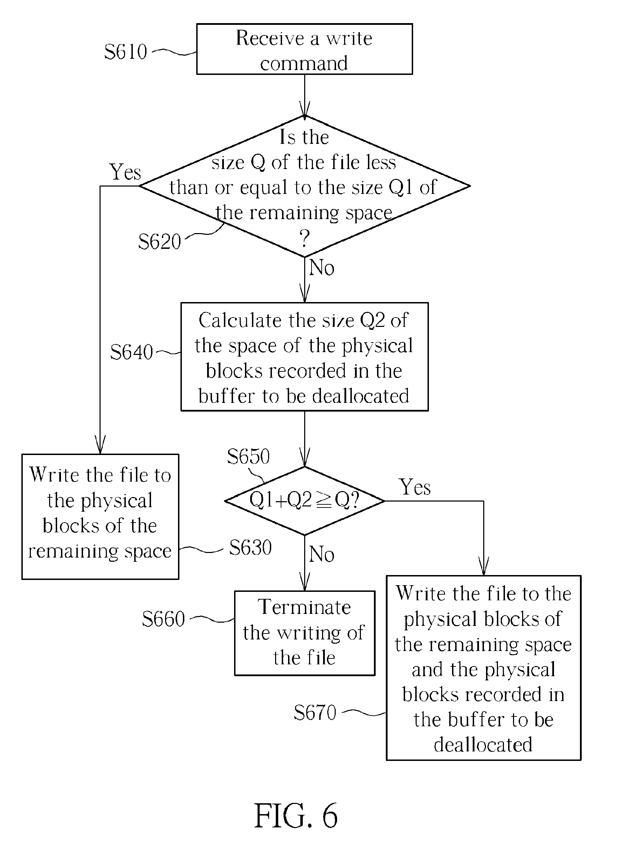

In the embodiment of the present invention, the mappings 232_1 to 232_N recorded in the buffer 230 may be used by the controller 210 as a basis for executing a write command. FIG. 6 is a flowchart of the controller 210 executing a write command Wr of the operating machine 240. In the embodiment, when the operating machine 240 sends the write command Wr (Step S610) to the storage system 200, the controller 210 is instructed to write a file F1 to the storage module 220. If the remaining space in the storage module 220 is not enough to store the file F1, the controller 210 may determine if the physical blocks recorded in the buffer 230 to be deallocated may be used to store the data of the file F1. If the file F1 has a size Q, the remaining space in the storage module 220 has a size Q1, and the space of the physical blocks recorded in the buffer 230 to be deallocated has a size Q2, the controller 210 may first determine if the size Q of the file F1 is less than or equal to the size Q1 of the remaining space in the storage module 220 (Step S620). If the size Q of the file F1 is less than or equal to the size Q1 of the remaining space in the storage module 220, the controller 210 will write the file F1 to the physical blocks of the remaining space in the storage module 220 (Step S630). Else, if the size Q of the file F 1 is greater than the size Q2 of the remaining space in the storage module 220, the controller 210 may calculate the size Q2 of the space of the physical blocks recorded in the buffer 230 to be deallocated (Step S640) and determine if the sum (Q1+Q2) of the size Q1 of the remaining space in the storage module 220 and the size Q2 of the space of the physical blocks recorded in the buffer 230 to be deallocated is greater than the size Q of the file F1 (Step S650). If (Q1+Q2) is less than Q, the controller 210 may terminate the writing of the file F1. Else, if (Q1+Q2) is greater than or equal to Q, the controller 210 may write the file F1 to the physical blocks of the remaining space in the storage module 220 and the physical blocks recorded in the buffer 230 to be deallocated (Step S670). During step S670, a part of the physical blocks recorded in the buffer 230 to be deallocated may be used to store part of the data of the file F1 and the remaining part of the data of the file F1 may be stored in the remaining space in the storage module 220. At this point, the physical blocks used to store the part of the data of the file F1 originally waiting for deallocation need not perform deallocation anymore and data of the physical blocks will be overwritten by the data of the file F1. In this way, time and resource that would have been used in the deallocation of the physical blocks where part of the data of the file F 1 is stored may be saved. When the data of a physical block is overwritten by data of the file f1, the corresponding mappings in the buffer 230 may be deleted.

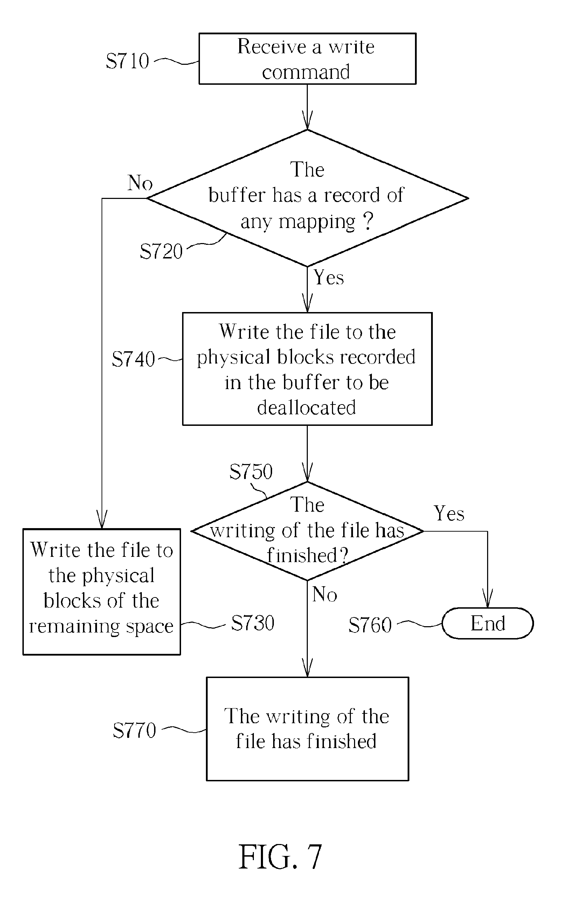

FIG. 7 is a flowchart of the controller 210 executing a write command Wr of the operating machine 240 according to another embodiment of the present invention. Unlike the previous embodiments, in this embodiment, when the operating machine 240 sends a write command Wr (Step S710) to the storage system 200, the controller 210 may be instructed to write the file F1 to the storage module 220. The controller 210 may first determine if the buffer 230 has a record of any mapping (Step S720). When the buffer 230 is determined to not have any mapping recorded, the controller 210 may write the file F1 to the physical blocks of the remaining space in the storage module 220 (Step S730). Furthermore, if it is determined that the buffer 230 has a mapping recorded in Step S720, the controller 210 may write the file F1 to the physical blocks recorded in the buffer 230 to be deallocated (Step S740). Afterwards, the controller 210 may determine if the writing of the file F1 has finished (Step S750). If there is a non-written part of the file F1, the controller 210 may write the non- written part of the file F1 to the remaining space in the storage module 220 (Step S770). Else, if the writing operation of the file F1 has been completed, end the whole process (Step S760).

Furthermore, if the file F1 has a size Q, the remaining space in the storage module 220 has a size Q1, and the space of the physical blocks recorded in the buffer 230 to be deallocated has a size Q2, in an embodiment of the present invention, before performing step S730, the controller 210 may first determine if the remaining space in the storage module 220 is greater than the size Q of the file F1. Only when the size Q of the file F1 does not exceed the size Q1 of the remaining space in the storage module 220 will the controller 210 perform step S730. However, if the size Q of the file F1 is greater than the size Q1 of the remaining space in the storage module 220, the controller 210 will not perform step S730 and will notify the operating machine 240 that the remaining space in the storage module 220 is not enough to store the file F1. Furthermore, before performing step S740, the controller 210 may determine if the sum (Q1+Q2) of the size Q1 of the remaining space in the storage module 220 and the size Q2 of the space of the physical blocks recorded in the buffer 230 to be deallocated is greater than the size Q of the file F1. Only when the size Q of the file F1 does not exceed the sum (Q1+Q2) will the controller 210 perform step S740. However, if the size Q of the file F1 is greater than the sum (Q1+Q2), the controller 210 may not perform step S740 and will notify the operating machine 240 that the remaining space in the storage module 220 is not enough to store the file F1.

In summary, when an unmap command is executed by the storage system according to the method for controlling the storage system of the present invention, the mappings may be moved to the buffer to prepare at least one deallocation procedure. Afterwards, a completion response is sent to the operating machine. After sending the completion response, the storage system may continue to execute subsequent commands, thereby reducing the response time of storage system to the unmap command. Furthermore, the storage system may be determined to be busy or in an idle state according to the workload of the storage system. When the storage system is determined to be in the idle state, the controller may execute deallocation procedure in the background to perform deallocation of physical blocks and release the space of the physical blocks so that the storage system may show better performance.

## Claims

1. A method of controlling a storage system (200), comprising:
receiving an unmap command (S410, S510) from an operating machine (240), wherein the unmap command (S410, S510) is configured to cancel a mapping (232_1-232_N) between a physical block (222_1-222_M) and a logic block of a storage module (220) of the storage system (200);
the method **characterized by**:
moving (S520) the mapping (232_1-232_N) to a buffer (230) of the storage system (200) to prepare a deallocation procedure in response to the unmap command (S410, S510), wherein the deallocation procedure is configured to deallocate the physical block (222_1-222_M) according to the mapping (232_1-232_N) stored in the buffer (230);
sending a completion response (S440, S530) to the operating machine (240), wherein the completion response (S440, S530) is configured to inform the operating machine (240) of completion of the unmap command (S410, S510) execution; and
executing the deallocation procedure according to workload of the storage system (200) after sending the completion response (S440, S530) to the operating machine (240).

2. The method of claim 1, wherein the unmap command (S410, S510) is configured to cancel mappings (232_1-232_N) between a plurality of the physical blocks (222_1-222_M) and a plurality of logic blocks, the deallocation procedure comprises a plurality of deallocation procedures, each of the plurality of deallocation procedures is configured to deallocate a physical block (222_1-222_M), and executing the deallocation procedure according to the workload of the storage system (200) is **characterized by** executing the plurality of deallocation procedures according to workload of the storage system (200).

3. The method of any of claims 1-2, wherein executing the deallocation procedure according to the workload of the storage system (200) is further **characterized by** executing the deallocation procedure when an amount of data to be processed by a controller (240) of the storage system (200) is less than a predetermined value.

4. The method of any of claims 1-3, further **characterized by**:
receiving a write command, wherein the write command is configured to write a file into the storage module (220);
determining if the buffer (230) records any mapping (232_1-232_N); and
writing the file into physical blocks (222_1-222_M) recorded by the buffer (230) to be deallocated when determined that the buffer (230) records any mapping (232_1-232_N).

5. The method of claim 4, further **characterized by** writing parts of the file not written into the physical blocks (222_1-222_M) recorded by the buffer (230) to be deallocated into a remaining space of the storage module (220) when a size of the file exceeds a size of the physical blocks (222_1-222_M) recorded by the buffer (230) to be deallocated.

6. The method of any of claims 1-3, further **characterized by**:
receiving a write command, wherein the write command is configured to write a file into the storage module (220);
calculating a size of physical blocks (222_1-22_M) recorded by the buffer (230) to be deallocated when a size of the file exceeds a size of a remaining space of the storage module (220); and
storing at least one part of the file into the physical blocks (222_1-222_M) recorded by the buffer (230) to be deallocated when a total of the size of the remaining space of the storage module (220) and the size of the physical blocks (222_1-222_M) recorded by the buffer (230) to be deallocated is greater than or equal to the size of the file.

7. The method of any of claims 1-6, further **characterized by** receiving and executing another command received from the operating machine (240) after sending the completion response (S440, S530) to the operating machine (240) and before executing the deallocation procedure.

8. A storage system (200), comprising:
a storage module (220) having a plurality of physical blocks (222_1-222_M) for
storing data;
a buffer (230) configured to temporarily store data; and
a controller (210) coupled to the plurality of physical blocks (222_1-222_M) and the buffer (230) and **characterized by** being configured to execute steps of:
receiving an unmap command (S410, S510) from an operating machine (240), wherein the unmap command (S410, S510) is configured to cancel a mapping (232_1-232_N) between a physical block (222_1-222_M) and a logic block of the storage module (220) of the storage system (200);
moving the mapping (232_1-232_N) to the buffer (230) of the storage system (200) to prepare a deallocation procedure in response to the unmap command (S410, S510), wherein the deallocation procedure is configured to deallocate the physical block (222_1-222_M) according to the mapping (232_1-232_N) stored in the buffer (230);
sending a completion response to the operating machine (240), wherein the completion response is configured to inform the operating machine (240) of completion of the unmap command (S410, S510) execution; and
executing the deallocation procedure according to workload of the storage system (200) after sending the completion response to the operating machine (240).

9. The storage system (200) of claim 8, wherein the unmap command (S410, S510) is configured to cancel mappings (232_1-232_N) between a plurality of physical blocks (222_1-222_M) and a plurality of logic blocks, the deallocation procedure comprises a plurality of deallocation procedures, each of the plurality of deallocation procedures is configured to deallocate a physical block (222_1-222_M), and the controller (210) is further **characterized by** being further configured to execute the each of the plurality of deallocation procedures according to the workload of the storage system (200) after the completion response is sent to the operating machine (240).

10. The storage system (200) of any of claims 8-9, wherein the controller (210) is **characterized by** being further configured to execute the deallocation procedure when an amount of data to be processed by the controller (210) is less than a predetermined value.

11. The storage system (200) of any of claims 8-10, wherein the controller (210) is **characterized by** being further configured to execute steps of:
receiving a write command, wherein the write command is configured to write a file into the storage module (220);
determining if the buffer (230) records any mapping (232_1-232-N); and
writing the file into physical blocks (222_1-222_M) recorded by the buffer (230) to be deallocated when determined that the buffer (230) records any mapping (232_1-232_N).

12. The storage system (200) of claim 11, wherein the controller (210) is **characterized by** being further configured to execute a step of writing parts of the file not written into the physical blocks (222_1-222_M) recorded by the buffer (230) to be deallocated into a remaining space of the storage module (220) when a size of the file exceeds a size of the physical blocks (222_1-222_M) recorded by the buffer (230) to be deallocated.

13. The storage system (200) of any of claims 8-10, wherein the controller (210) is **characterized by** being further configured to execute steps of:
receiving a write command, wherein the write command is configured to write a file into the storage module (220);
calculating a size of physical blocks (222_1-222_M) recorded by the buffer (230) to be deallocated when a size of the file exceeds a size of a remaining space of the storage module (220); and
storing at least one part of the file into the physical blocks (222_1-222_M) recorded by the buffer (230) to be deallocated when a total of the size of the remaining space of the storage module (220) and the size of the physical blocks (222_1-222_M) recorded by the buffer (230) to be deallocated is greater than or equal to the size of the file.

14. The storage system (200) of any of claims 8-13, wherein the storage system (200) is **characterized by** being selected from a group consisting of a Redundant Array of Independent Disks (RAID), a solid state drive, a hard disk, and a flash memory.
